# EUROPÄISCHE PATENTANMELDUNG

(11) **EP 2 222 135 A2**
(43) Veröffentlichungstag der Anmeldung: **25.08.2010**
(21) Anmeldenummer: 10151505.4
(22) Anmeldetag: 25.01.2010
(51) Int. Cl.: H05B 37/02, H05B 41/36

(54) **Schaltung zur Ansteuerung eines Betriebsgeräts für eine Lichtanwendung, Betriebsgerät und Verfahren zum Betrieb der Schaltung**

(30) Priorität: 18.02.2009 DE 102009009535
(71) Anmelder: Osram Gesellschaft mit beschränkter Haftung, 81536 München (DE)
(72) Erfinder: Häußer, Helmut, 83301 Traunstein (DE)

(57) **Zusammenfassung**

Es wird eine Schaltung zur Ansteuerung eines Betriebsgeräts für eine Lichtanwendung angegeben mit einem galvanisch getrennten Übertrager, an den ein Steuersignal anlegbar ist und mit einem Leistungsteil, das von dem galvanisch getrennten Übertrager abhängig von dem Steuersignal aktivierbar ist. Weiterhin werden ein entsprechendes Betriebsgerät sowie ein Verfahren zum Betrieb der Schaltung vorgeschlagen.

## Beschreibung

Die Erfindung betrifft eine Schaltung zur Ansteuerung eines Betriebsgeräts für eine Lichtanwendung, ein Betriebsgerät und ein Verfahren zum Betrieb der Schaltung.

Leuchten, Vorschaltgeräte und sonstige für Lichtanwendungen relevante Geräte werden oftmals über ein Bussystem (z.B. einen DALI Bussystem) angesteuert.

Das "Digital Addressable Lighting Interface" (DALI) ist ein Steuerprotokoll zur Steuerung digitaler lichttechnischer Betriebsgeräte in Gebäuden (z. B. elektronischer Transformatoren, EVGs, elektronischer Leistungsdimmer etc.). Jedes Betriebsgerät, das über eine DALI-Schnittstelle verfügt, kann über DALI-Kurzadressen einzeln angesteuert werden. Durch einen bidirektionalen Datenaustausch kann ein DALI-Steuergerät bzw. ein DALI-Gateway den Status von Leuchtmitteln bzw. von Betriebsgeräten einer Leuchte abfragen bzw. den Zustand setzen.

Hierbei ist es von Nachteil, dass die Betriebsgeräte im inaktiven Betrieb trotzdem elektrische Energie verbrauchen.

Die **Aufgabe** der Erfindung besteht darin, die vorstehend genannten Nachteile zu vermeiden und insbesondere eine Schaltung anzugeben, die zur Ansteuerung einer Lampe einsetzbar ist und in einem inaktiven (Standby) Betrieb sehr wenig elektrische Energie verbraucht.

Diese Aufgabe wird gemäß den Merkmalen der unabhängigen Patentansprüche gelöst. Weiterbildungen der Erfindung ergeben sich auch aus den abhängigen Ansprüchen.

Zur Lösung der Aufgabe wird eine Schaltung zur Ansteuerung eines Betriebsgeräts für eine Lichtanwendung angegeben
- mit einem galvanisch getrennten Übertrager, an den ein Steuersignal anlegbar ist;
- mit einem Leistungsteil, das von dem galvanisch getrennten Übertrager abhängig von dem Steuersignal aktivierbar ist.

Hierdurch kann vorteilhaft das Betriebsgerät in einem Standby-Modus derart angesteuert werden, dass dieses nur eine sehr geringe Standby-Leistung benötigt. Insbesondere wenn kein Steuersignal anliegt kann eine effektive Entkopplung des Leistungsteils erreicht werden.

Eine Weiterbildung ist es, dass der galvanisch getrennte Übertrager mindestens eine der folgenden Komponenten umfasst:
- einen Optokoppler;
- einen Photovoltaic-Treiber;
- einen Transformator.

Bei dem Optokoppler handelt es sich beispielsweise um eine Leuchtdiode, die Photonen auf einen Transistor überträgt und den Transistor dadurch leitfähig macht. Der Photovoltaic-Treiber umfasst beispielsweise eine Leuchtdiode, die Photonen auf eine Solarzelle überträgt und dadurch eine Spannung bereitstellt. Der Transformator ist insbesondere ein magnetischer Transformator und/oder ein Netzfrequenz-Transformator.

Vorteilhaft erreicht der galvanisch getrennte Übertrager eine galvanische Trennung des Potentials des Steuersignals von dem Potential des Leistungsteils. Das Steuersignal kann einer Potentialebene einer Prozessoreinheit (Mikroprozessors), z.B. eines für ein DALI-Bussystem vorgesehenen Mikroprozessors, entsprechen. Der galvanisch getrennte Übertrager ist beispielsweise ausgestaltet zur Einkopplung oder Einprägung der Steuersignale in Richtung des Leistungsteils.

Beispielhaft kann der galvanisch getrennte Übertrager Teil einer Ansteuerung sein.

Eine andere Weiterbildung ist es, dass das Betriebsgerät mindestens eine der folgenden Komponenten umfasst oder als mindestens eine der folgenden Komponenten ausgeprägt ist:
- eine Lampe oder eine Leuchte, insbesondere ein Leuchtsystem;
- ein elektronisches Vorschaltgerät;
- einen Transformator;
- ein Aktor;
- ein Sensor.

Der Aktor ist eine Komponente (z.B. ein Schalter), die eine vorgegebene Aktion basierend auf dem Steuersignal ausführt. Entsprechend kann der Sensor ein Signal als Steuersignal dem Bussystem bereitstellen.

Das elektronische Vorschaltgerät kann einen Transformator für Halogenlampen umfassen. Der Transformator kann ein Transformator für mindestens eine Halogenlampe sein.

Somit kann es sich bei dem Betriebsgerät beispielsweise um eine Lampe mit einem integrierten Vorschaltgerät und mit einem Sensor zur Helligkeitsdetektion handeln.

Insbesondere ist das Betriebsgerät als Lampe, Leuchte, Lampensystem, Vorschaltgerät oder umfassend mehrere der vorgenannten Komponenten dimmbar ausgeführt.

Insbesondere ist es eine Weiterbildung, dass das Steuersignal von einem Bussystem, insbesondere von einem DALI-Bussystem, stammt.

Auch ist es eine Weiterbildung, dass der galvanisch getrennte Übertrager und der Leistungsteil mit einer Versorgungseinheit verbunden sind, wobei die Versorgungseinheit einen elektrischen Schalter aufweist, der in einem Standby-Betrieb den Leistungsteil insbesondere weitgehend abschaltet.

Der elektronische Schalter (sowie jeder hier genannte elektronische Schalter) kann als ein Transistor, z.B. ein Bipolartransistor, ein Mosfet, ein IGBT oder als ein sonstiger elektrischer Schalter ausgeführt sein.

Ferner ist es eine Weiterbildung, dass der galvanisch getrennte Übertrager über eine Push-Pull-Stufe mit dem Leistungsteil verbunden ist.

Im Rahmen einer zusätzlichen Weiterbildung weist der Leistungsteil mindestens zwei elektronische Schalter auf, die gemeinsam angesteuert werden und bei deren Ansteuerung ein Verbraucher zumindest zeitweise mit einer Versorgungsspannung verbunden ist.

Somit kann beispielsweise über eine Phasenschnittsteuerung (z.B. in Form einer Phasenanschnitt- und/oder einer Phasenabschnittssteuerung) mindestens eine Lampe gedimmt werden.

Eine nächste Weiterbildung besteht darin, dass anhand der Schaltung eine Helligkeit mindestens einer Lampe regelbar ist.

Eine Ausgestaltung ist es, dass die Helligkeit der mindestens einen Lampe mittels einer Phasenschnittssteuerung regelbar ist insbesondere in Abhängigkeit des Steuersignals.

Bei der Phasenschnittsteuerung handelt es sich z.B. um eine Phasenanschnittsteuerung und/oder um eine Phasenabschnittsteuerung.

Eine alternative Ausführungsform besteht darin, dass das Steuersignal von einem Mikroprozessor bereitstellbar ist, wobei der Mikroprozessor insbesondere über eine Busschnittstelle mit einem Bussystem verbunden ist.

Hierbei sei angemerkt, dass der Mikroprozessor ein beliebiger Rechner oder Prozessor mit entsprechender Hardware und/oder Software (bzw. Firmware) sein kann. Auch kann der Mikroprozessor als FPGA oder ASIC ausgeführt sein.

Die vorstehend genannte Aufgabe wird auch gelöst anhand eines Betriebsgeräts umfassend die Schaltung wie hier beschrieben, wobei das Betriebsgerät zum Anschluss an ein Bussystem ausgeführt sein kann, insbesondere an ein DALI-Bussystem.

Eine Ausgestaltung ist es, dass das Betriebsgerät zur Ansteuerung mindestens einer Lampe eingerichtet ist.

Auch ist es eine Ausgestaltung, dass die Helligkeit der mindestens einen Lampe über das Bussystem einstellbar ist oder dass die mindestens eine Lampe zumindest vorübergehend deaktivierbar ist über das Bussystem, insbesondere anhand von über das Bussystem bereitgestellter Signale.

Eine Weiterbildung besteht darin, dass das Betriebsgerät in Form einer Leuchte oder eines Leuchtsystems ausgestaltet ist.

Die vorstehend genannte Aufgabe wird auch gelöst durch ein Verfahren zum Betrieb der hierin beschriebenen Schaltung, wobei abhängig von dem Steuersignal mindestens eine Lampe angesteuert oder ausgeschaltet wird.

Ausführungsbeispiele der Erfindung werden nachfolgend anhand der Zeichnungen dargestellt und erläutert.

### Es zeigen:

- Fig.1: eine beispielhafte Ausführungsform für eine Betriebsschaltung umfassend eine Versorgungseinheit, eine Ansteuerung und ein Leistungsteil;
- Fig.2: eine alternative Schaltung für die Betriebsschaltung gemäß Fig.1;
- Fig.3: ein Gesamtblockschaltbild für ein Betriebsgerät, das über einen DALI-Bus angesteuert wird;
- Fig.4: beispielhaft eine mögliche Realisierung der Betriebsschaltung gemäß Fig.3.

Nachfolgend wird der DALI-Bus als ein Beispiel für ein Bussystem verwendet zum Einsatz in Verbindung bzw. zur Ansteuerung von Lichtanwendungen. Entsprechend können andere Bussysteme eingesetzt werden.

Über das Bussystem können verschiedene Betriebsgeräte, z.B. ein elektronisches Vorschaltgerät (EVG), eine Lampe oder eine Leuchte, ein Sensor, ein Aktor oder Kombinationen der vorgenannten angesteuert werden. Auch ist es möglich, dass das Betriebsgerät über das Bussystem Informationen an mindestens ein weiteres Betriebsgerät und/oder an ein zentrales Steuergerät übermittelt.

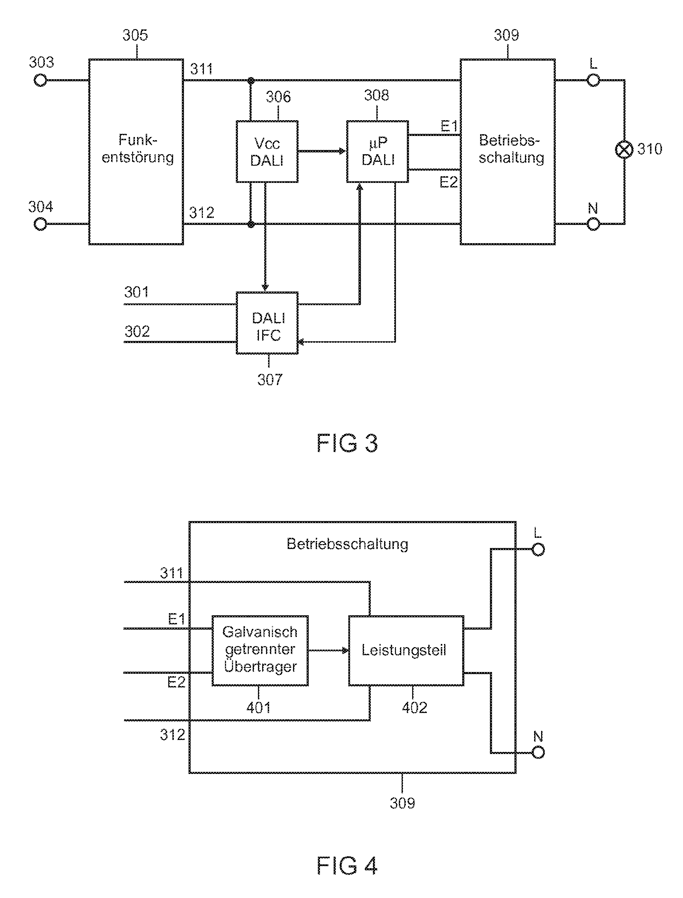

**Fig.3** zeigt ein Gesamtblockschaltbild für ein Betriebsgerät, das über einen DALI-Bus angesteuert wird.

Das Betriebsgerät ist über eine Funkentstörung 305 mit den Anschlüssen 303 und 304 mit einer Stromversorgung verbunden. Über ihre Ausgänge 311 und 312 verhindert die Funkentstörung 305 eine Emission von Funkstörsignalen aus dem Betriebsgerät. Das Betriebsgerät umfasst weiterhin ein DALI-Interface 307, das mit DALI-Leitungen 301 und 302 verbunden ist. Das DALI-Interface 307 wird von einer DALI-Spannungsversorgung 306 gespeist. Die DALI-Spannungsversorgung 306 erhält ihre Versorgungsspannung über die Anschlüsse 311 und 312 der Funkentstörung 305. Das Betriebsgerät umfasst weiterhin einen Mikroprozessor 308 zur DALI-Steuerung bzw. zur Auswertung der von dem DALI-Interface 307 erhaltenen Signale. Entsprechend kann der Mikroprozessor 308 auch Signale an das DALI-Interface 307 übermitteln zur Weiterleitung über die DALI-Leitungen 301 und 302. Der Mikroprozessor 308 stellt über zwei Leitungen E1 und E2 einer Betriebsschaltung 309 ausgewertete DALI-Signale bereit. Die Betriebsschaltung 309 ist mit den Anschlüssen 311 und 312 der Funkentstörung verbunden und kann ausgangsseitig über Anschlüsse L und N (line, neutral) eine Lampe 310 ansteuern.

Nachfolgend wird in **Fig.4** beispielhaft eine mögliche Realisierung der Betriebsschaltung 309 gezeigt.

Wie in Fig.3 ausgeführt ist, ist die Betriebsschaltung 309 mit den Anschlüssen 311 und 312 der Funkentstörung 305 verbunden. Weiterhin erhält ein galvanisch getrennter Übertrager 401 der Betriebsschaltung 309 die Signale E1 und E2 des Mikroprozessors 308. Der galvanisch getrennte Übertrager 401 steuert ein Leistungsteil 402 an, das mit den Anschlüssen 311 und 312 der Funkentstörung 305 verbunden ist und ausgangsseitig über Anschlüsse L und N die Lampe 310 ansteuern kann.

Der galvanisch getrennte Übertrager 401 kann auf verschiedene Arten realisiert sein. Beispielsweise kann es sich hierbei um eine Übertragungsstrecke zwischen einer Leuchtdiode und einer Solarzelle (z.B. in Form eines Bauteils APV1122, Photovoltaic MosFet Treiber) handeln, um einen Optokoppler oder um einen magnetischen Transformator für Netzfrequenzen handeln.

Im Falle des Standby-Betriebs wird der Mikroprozessor 308 über die Spannungsversorgung 306 versorgt. Die Betriebsschaltung 309 wird so vorzugsweise derart ausgelegt, dass sie in einem derartigen Standby-Modus weniger als 0,01W verbraucht. Hierbei ergibt sich der Vorteil einer sehr geringen Standby-Leistung bei voller Aussteuerbarkeit, wobei insbesondere durch den galvanisch getrennten Übertrager 401 eine effiziente Ansteuerung mittels DALI-Bussignalen erfolgen kann.

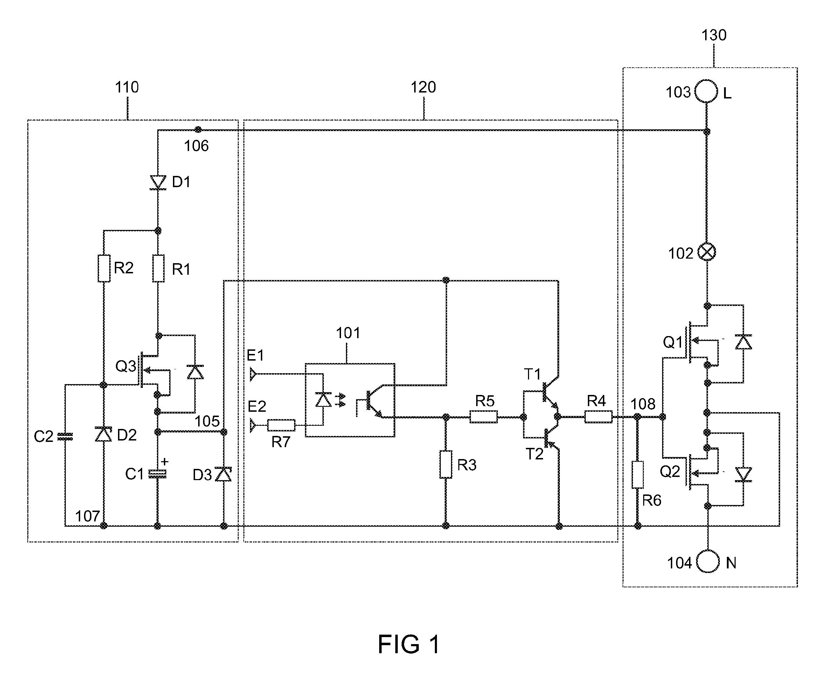

**Fig.1** zeigt eine beispielhafte Ausführungsform der Betriebsschaltung 309 umfassend eine Versorgungseinheit 110, eine Ansteuerung 120 und das Leistungsteil 402, das in Fig.1 in Form eines Leistungsteil 130 ausgeführt ist.

Die Versorgungseinheit 110 umfasst eine Diode D1, zwei Widerstände R1 und R2, zwei Kondensatoren C1 und C2, zwei Zener-Dioden D2 und D3 sowie einen n-Kanal-MOSFET Q3 mit einer Diode zwischen dem Drain-Anschluss und dem Source-Anschluss des n-Kanal-MOSFETs Q3. Die Diode D1 verhindert, dass der Kondensator C1 über die Diode des MOSFETs Q3 entladen wird und damit die Versorgungsspannung ausfällt, weil die Zwischenkreisspannung bis auf Null zurückgehen kann (der Zwischenkreis folgt der gleichgerichteten Wechselspannung) und damit der Kondensator C1 entladen wird.

Die Anode der Diode D1 ist mit einem Knoten 106 verbunden, die Kathode der Diode D1 ist über den Widerstand R1 mit dem Drain-Anschluss des MOSFETs Q3 verbunden. Die Kathode der Diode D1 ist zusätzlich über den Widerstand R2 mit dem Gate-Anschluss des MOSFETs Q3 verbunden. Der Gate-Anschluss des MOSFETs Q3 ist weiterhin mit der Kathode der Zener-Diode D2 sowie über den Kondensator C2 mit einem Knoten 107 verbunden. Die Anode der Zener-Diode D2 ist auch mit dem Knoten 107 verbunden. Bei dem Knoten 107 handelt es sich um ein Bezugspotenzial. Der Source-Anschluss des MOSFETs Q3 ist über den Kondensator C1, der vorzugsweise als ein Elektrolytkondensator ausgeführt ist, mit dem Knoten 107 verbunden. Weiterhin ist der Source-Anschluss des MOSFETs Q3 mit einem Knoten 105 verbunden, wobei der Knoten 105 mit der Kathode der Zener-Diode D3 verbunden ist. Die Anode der Zenerdiode D3 ist mit dem Knoten 107 verbunden.

Die Ansteuerung 120 umfasst einen Optokoppler 101, Eingänge E1 und E2 (siehe hierzu die Ausführungen zu Fig.3 und Fig.4), Widerstände, R3, R4, R5 und R7 sowie einen npn-Transistor T1 und einen pnp-Transistor T2.

Die Anschlüsse E1 und E2 sind miteinander über den Widerstand R7 und die Leuchtdiode des Optokopplers 101 miteinander verbunden. Der Kollektor des Fototransistors des Optokopplers 101 ist mit dem Knoten 105 verbunden, der Emitter des Fototransistors des Optokopplers 101 ist über den Widerstand R3 mit dem Knoten 107 verbunden. Weiterhin ist der Emitter des Fototransistors des Optokopplers 101 über einen Widerstand 105 mit der Basis des Transistors T1 sowie mit der Basis des Transistors T2 verbunden (die Basisanschlüsse der Transistoren T1 und T2 sind entsprechend miteinander verbunden). Der Kollektor des Transistors T1 ist mit dem Knoten 105 verbunden, der Emitter des Transistors T2 ist mit dem Knoten 107 verbunden. Weiterhin ist der Emitter des Transistors T1 mit dem Kollektor des Transistors T2 und über den Widerstand R4 mit einem Knoten 108 verbunden.

Der Leistungsteil 130 umfasst eine Lampe 102, Anschlüsse 102 (L-Anschluss), 104 (N-Anschluss), MOSFETs Q1 und Q2 sowie einen Widerstand R6.

Zwischen dem Drain-Anschluss des MOSFETs Q1 und dem Source-Anschluss des MOSFETs Q1 ist eine (integrierte) Diode angeordnet, wobei die Kathode der Diode mit dem Drain-Anschluss verbunden ist. Ebenso ist zwischen dem Drain-Anschluss des MOSFETs Q2 und dem Source-Anschluss des MOSFETs Q2 eine (integrierte) Diode angeordnet, wobei die Kathode der Diode mit dem Drain-Anschluss verbunden ist.

Der Knoten 108 ist über den Widerstand R6 mit dem Knoten 107 verbunden. Der Knoten 108 ist weiterhin sowohl mit dem Gate-Anschluss des MOSFETs Q1 als auch mit dem Gate-Anschluss des MOSFETs Q2 verbunden. Der Source-Anschluss des MOSFETs Q1 ist mit dem Source-Anschluss des MOSFETs Q2 und mit dem Knoten 107 verbunden. Der Drain-Anschluss des MOSFETs Q1 ist über die Lampe 102 mit dem Knoten 106 verbunden, der wiederum mit dem Anschluss 103 verbunden ist. Der Drain-Anschluss des MOSFETs Q2 ist mit dem Anschluss 104 verbunden.

Benötigt die Betriebsschaltung 309 keine Leistung (im Standby-Betrieb), also bei abgeschalteter Lampe 102, so wird die Versorgung des Leistungsteils 130 über den MOSFET Q3 abgeschaltet. Es wird lediglich ein geringer Strom für den Gate-Anschluss des MOSFETs Q3 benötigt. Vorzugsweise ist der Widerstand R2 verhältnismäßig groß (im Bereich von Megaohm) dimensioniert. Die Versorgungseinheit 110 stellt der Ansteuerung eine Potential bereit, das zwischen den für die Ansteuerung der MOSFETs Q1 und Q2 benötigten Potentialen liegt.

Sowohl im Standby-Betrieb als auch während des aktiven Betriebs steht der Versorgungseinheit 110 immer die volle Netzspannung zur Verfügung. Durch die Diode D1 wird nur die positive Halbwelle der Stromversorgung genutzt.

Die Kombination aus dem Widerstand R5, den Transistoren T1 und T2 stellt eine sogenannte Push-Pull-Stufe dar, die Strom nur dann benötigt, wenn sie umschaltet. Ohne Schaltvorgang wird entsprechend kein Strom benötigt. Dies ist äußerst effizient, da der Optokoppler 101 über den Mikroprozessor 308 (Signale E1 und E2) gespeist wird und ohne Ansteuerung der Fototransistor des Optokopplers 101 sperrt. Demnach wird die Push-Pull-Stufe nicht aktiviert und benötigt auch keinen Strom, wenn nicht auf bestimmte Ansteuersignale des Mikroprozessors 308 reagiert werden soll.

Im Betrieb kann die Lampe 102 angesteuert werden mittels Signale über die Leitungen E1 und E2. Hierbei kann die Helligkeit der Lampe eingestellt werden durch eine entsprechende Phasenanschnitt- oder Phansenabschnittsteuerung. Die positiven sowie die negative Halbwellen können zur Ansteuerung der Lampe 102 genutzt werden. Auch können unterschiedliche bzw. beliebige Abschnitte der jeweiligen Phasen zur Helligkeitsregelung (Dimmung) der Lampe 102 verwendet werden.

Entsprechend kann über den DALI-Bus in Form der DALI Leitungen 301 und 302 ein entsprechendes Steuersignal zur Dimmung der Lampe 310 bzw. 102 von dem DALI-Interface 307 zu dem Mikroprozessor 308 geleitet werden und dort in ein entsprechendes Ansteuersignal (zur Phasenschnittsteuerung der Halbwellen) erzeugt und über die Leitungen E1, E2 an die Betriebsschaltung 309 übermittelt werden. Auch ist ein entsprechendes Ausschaltsignal auf dem gleichen Weg von dem in Fig.3 gezeigten Betriebsgerät detektierbar und wird von dem Mikroprozessor 308 entsprechend umgesetzt. Im Standby-Betrieb benötigt die Betriebsschaltung, wie vorstehend beschrieben wurde, nur einen sehr geringen Strom.

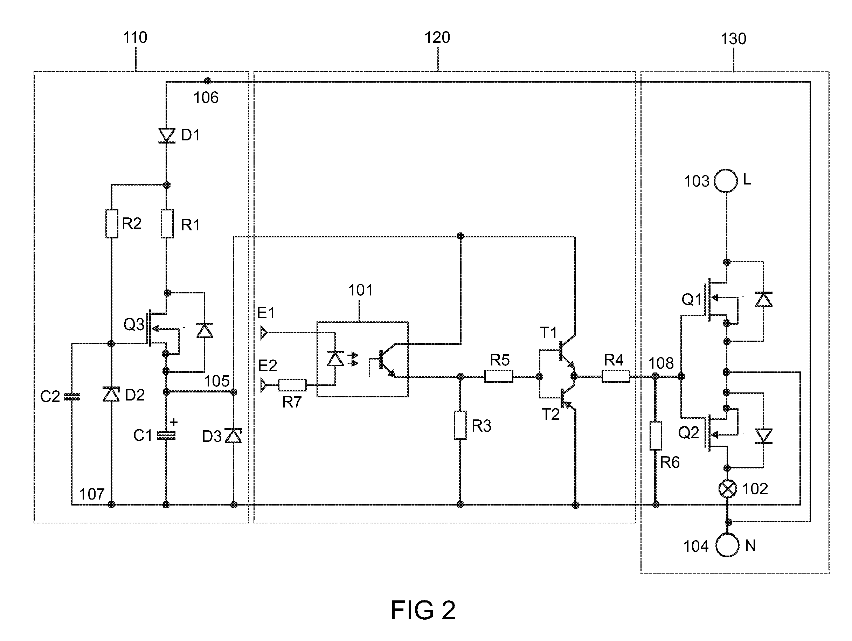

**Fig.2** zeigt eine alternative Schaltung für die Betriebsschaltung 309, deren Versorgungseinheit 110 und Ansteuerung 120 mit den entsprechenden Komponenten in Fig.1 identisch sind.

Hinsichtlich des Leistungsteils 130 sind die gleichen Bauteile wie in dem Leistungsteil 130 gemäß Fig.1 vorgesehen, nur deren Beschaltung unterscheidet sich wie folgt: Der Drain-Anschluss des MOSFETs Q2 ist über die Lampe 102 mit dem Knoten 106 und dem Anschluss 104 verbunden, der Drain-Anschluss des MOSFETs Q1 ist mit dem Anschluss 103 verbunden.

Ein Vorteil des hier vorgestellten Ansatzes besteht darin, dass die Standby-Verluste deutliche verringert werden können und dass eine einfache Ansteuerung der Betriebsschaltung, insbesondere des Leistungsteils der Betriebsschaltung, vorgeschlagen wird. Außerdem verfügt der hier vorgeschlagene Ansatz über gute Entstörmöglichkeiten.

### Bezugszeichenliste:

- 110: Versorgungseinheit
- 120: Ansteuerung
- 130: Leistungsteil
- 101: Optokoppler
- 102: Lampe
- 103: L-Anschluss
- 104: N-Anschluss
- 105 bis: 108: jeweils Knoten(punkt) im Schaltplan

- 301: DALI (Signal-)Leitung
- 302: DALI (Signal-)Leitung
- 303: Anschluss der Stromversorgung zur Versorgung des Betriebsgeräts
- 304: Anschluss der Stromversorgung zur Versorgung des Betriebsgeräts
- 305: Funkentstörung
- 306: DALI-Spannungsversorgung
- 307: DALI-Interface
- 308: Mikroprozessor
- 309: Betriebsschaltung
- 310: Lampe
- 311: Ausgang der Funkenstörung 305
- 312: Ausgang der Funkenstörung 305

- 401: galvanisch getrennter Übertrager
- 402: Leistungsteil

## Patentansprüche

1. Schaltung zur Ansteuerung eines Betriebsgeräts für eine Lichtanwendung,
- mit einem galvanisch getrennten Übertrager (401), an den ein Steuersignal (E1, E2) anlegbar ist;
- mit einem Leistungsteil (402, 130), das von dem galvanisch getrennten Übertrager (401) abhängig von dem Steuersignal (E1, E2) aktivierbar ist.

2. Schaltung nach Anspruch 1, bei der der galvanisch getrennte Übertrager mindestens eine der folgenden Komponenten umfasst:
- einen Optokoppler;
- einen Photovoltaic-Treiber;
- einen Transformator.

3. Schaltung nach einem der vorhergehenden Ansprüche, bei der das Betriebsgerät mindestens eine der folgenden Komponenten umfasst oder als mindestens eine der folgenden Komponenten ausgeprägt ist:
- eine Lampe oder eine Leuchte, insbesondere ein Leuchtsystem;
- ein elektronisches Vorschaltgerät;
- einen Transformator;
- ein Aktor;
- ein Sensor.

4. Schaltung nach einem der vorhergehenden Ansprüche, bei der das Steuersignal (E1, E2) von einem Bussystem, insbesondere von einem DALI-Bussystem (307, 308), stammt.

5. Schaltung nach einem der vorhergehenden Ansprüche,
- bei der der galvanisch getrennte Übertrager (101) und der Leistungsteil (130) mit einer Versorgungseinheit (110) verbunden sind,
- wobei die Versorgungseinheit (110) einen elektrischen Schalter (Q3) aufweist, der in einem Standby-Betrieb den Leistungsteil (130) abschaltet.

6. Schaltung nach einem der vorhergehenden Ansprüche, bei der der galvanisch getrennte Übertrager (101) über eine Push-Pull-Stufe (T1, T2) mit dem Leistungsteil (130) verbunden ist.

7. Schaltung nach einem der vorhergehenden Ansprüche, bei der der Leistungsteil (130) mindestens zwei elektronische Schalter (Q1, Q2) aufweist, die gemeinsam angesteuert werden und bei deren Ansteuerung ein Verbraucher (102) zumindest zeitweise mit einer Versorgungsspannung (103, 104) verbunden ist.

8. Schaltung nach einem der vorhergehenden Ansprüche, bei der anhand der Schaltung eine Helligkeit mindestens einer Lampe (102, 310) regelbar ist.

9. Schaltung nach Anspruch 8, bei der die Helligkeit der mindestens einen Lampe mittels einer Phasenschnittssteuerung regelbar ist insbesondere in Abhängigkeit des Steuersignals.

10. Schaltung nach einem der vorhergehenden Ansprüche, bei der das Steuersignal von einem Mikroprozessor (308) bereitstellbar ist, wobei der Mikroprozessor insbesondere über eine Busschnittstelle (307) mit einem Bussystem (301, 302) verbunden ist.

11. Betriebsgerät umfassend die Schaltung gemäß einem der vorstehenden Ansprüche zum Anschluss an ein Bussystem, insbesondere ein DALI-Bussystem.

12. Betriebsgerät nach Anspruch 11 zur Ansteuerung mindestens einer Lampe.

13. Betriebsgerät nach Anspruch 12, bei dem die Helligkeit der mindestens einen Lampe über das Bussystem einstellbar ist oder bei dem die mindestens eine Lampe zumindest vorübergehend deaktivierbar ist über das Bussystem.

14. Betriebsgerät nach einem der Ansprüche 11 bis 13, bei dem das Betriebsgerät in Form einer Leuchte oder eines Leuchtsystems ausgestaltet ist.

15. Verfahren zum Betrieb der Schaltung nach einem der Ansprüche 1 bis 10, wobei abhängig von dem Steuersignal mindestens eine Lampe angesteuert oder ausgeschaltet wird.
